# EUROPEAN PATENT APPLICATION

(11) **EP 4 672 580 A1**
(43) Date of publication of application: **31.12.2025**
(21) Application number: 24185494.2
(22) Date of filing: 28.06.2024
(51) Int. Cl.: H02M 1/32, H02M 3/155

(54) **CONVERTER WITH MULTIFUNCTION OUTPUT PROTECTION CIRCUIT AND METHOD**

(71) Applicant: ABB SCHWEIZ AG, 5400 Baden (CH)
(72) Inventor: SCHWEIZER, Mario, 5406 Rütihof (CH); LAZAREVIC, Vladan, 5406 Baden-Rütihof, Aargau (CH); ABPLANALP, Markus Andreas, 5405 Baden-Dättwil (CH); CANALES, Francisco, 5405 Baden-Dättwil (CH)
(74) Representative: Maiwald GmbH

(57) **Abstract**

The invention relates to a converter (100) comprising a conversion stage (104) and an output protection circuit (106). The output protection circuit (106) comprises a first input terminal (201) and a second input terminal (202), and a first output terminal (203) and a second output terminal (204). The first input terminal and the first output terminal are on a first voltage level and the second input terminal and the second output terminal are on a second voltage level. The converter further comprises a switch S1 connected between the first input and output terminals or between the second input and output terminal, and an interruptible freewheeling circuit (120) between the first output terminal and the second output terminal. The freewheeling circuit comprises a freewheeling path (122) including a freewheeling switch and a freewheeling diode, and a voltage clamping device parallel to at least the freewheeling switch.

## Description

### Field of the Invention

The invention relates to a converter comprising a conversion stage and an output protection circuit, and a method for protecting power networks. Further, it relates to the use of the output protection circuit for limiting current in case of a fault in a power network.

### Background

The invention relates to converters which are being used to supply modern DC grids/microgrids. Applications are UPS converters with DC outlet, AC/DC active rectifiers used to feed DC grids from the AC grid, AC/DC converters to connect generators (diesel, wind, gas, flywheel) with the DC microgrid, and DC/DC converters used to connect battery storage, hydrogen or solar renewable energy sources to the DC grid. In such applications, the protection of the DC network from faults is a difficult task and often requires the usage of many costly solid state circuit breakers (SSCB) or hybrid circuit breakers. These devices are needed because of their fast reaction time and related quick interruption of fault currents with extremely high current derivative (di/dt) and related high prospective peak currents. The fault currents originate from the discharge of output filter capacitors and/or from converters using topologies which are unable to limit the fault current, such as simple boost converters. Whereas the second source, converters without current limiting capabilities, could be avoided by changing the topology, the first problem is of more general nature. As these converters are being used to supply a DC network, a capacitive output filter with low impedance needs to be employed to reduce bus voltage ripple and EMC. Typically, these output capacitors can be large and contribute to very high and very fast rising fault current peaks. To interrupt the fault currents quickly, the usage of SSCBs at various places in the DC grid, especially at the output of supply converters, has been proposed. However, these breakers introduce additional losses, are costly and have cooling issues due the space limitations. Often, it would be preferred to use slower, but cheaper mechanical circuit breakers. With today's opening times of a few to tens of milliseconds, these devices are not fast enough to prevent the short circuit peak currents described above. Ideally, the supply converters would limit the fault currents immediately to avoid peak currents in the kA range. It is possible to add a semiconductor switch in series at the output of every converter topology to interrupt the current. Together with a freewheeling diode, the current can also be limited for longer time periods. A remaining issue with the freewheeling diode is the inability to interrupt the fault current fast and dissipate the fault energy in a safe way. The fault energy is being dissipated in the fault itself and in the network, instead of in a dedicated, safe place. With a freewheeling diode, the tail current can have a significant duration (several 100ms) for highly inductive downstream networks. Consequently, although downstream breakers can rely on a limited fault current, still, the current interruption is task of the breaker because of the long-lasting tail current. During the tail current, the DC-bus voltage is tied down to nearly zero volts. If a more sophisticated approach would be envisioned, it is mandatory that converters could interrupt and ramp down fault currents very quickly in the range of tens or hundreds of microseconds. In this case, downstream breakers could be replaced with cheap contactors or relays as they could open under zero current condition.

Existing output protection stages are based on the following concepts:
A series semiconductor switch with a parallel varistor (MOV): this output protection stage can interrupt the output current quickly and avoids the tail current, but it is not suitable to limit the output current for a sufficient time duration. It has excessive losses in the MOV when operated in chopping mode. Alternatively, a series semiconductor switch and a freewheeling diode could be used: with this output protection stage, current-limitation is possible for extended time duration, but fast interruption of the fault current is not possible because of a long lasting tail current which flows in the freewheeling diode.

### Summary of the Invention

There may be a desire to provide an improved converter.

The problem is solved by the subject-matter of the independent claims. Embodiments are provided by the dependent claims, the following description and the accompanying figures. The described embodiments similarly pertain to the converter and the method for protecting a power network. Synergetic effects may arise from different combinations of the embodiments although they might not be described in detail.

Further on, it shall be noted that all embodiments of the present invention concerning a method might be carried out with the order of the steps as described, nevertheless this has not to be the only and essential order of the steps of the method. The herein presented methods can be carried out with another order of the disclosed steps without departing from the respective method embodiment, unless explicitly mentioned to the contrary hereinafter.

Technical terms are used by their common sense. If a specific meaning is conveyed to certain terms, definitions of terms will be given in the following in the context of which the terms are used.

According to a first aspect, a converter comprising a conversion stage and an output protection circuit is provided. The output protection circuit comprises a first and a second input terminal, and a first and a second output terminal. The first input terminal and the first output terminal are on a first voltage level and the second input terminal and the second output terminal are on a second voltage level. The converter further comprises a switch connected between the first input and output terminals or between the second input and output terminals, and a freewheeling circuit between the first output terminal and the second output terminal. The freewheeling circuit comprises an interruptible freewheeling path including a freewheeling switch and a freewheeling diode, and a voltage clamping device parallel to at least the interruptible freewheeling switch.

In other words, the output protection circuit comprises a freewheeling circuit including a switchable, i.e. interruptible freewheeling path, wherein the switchable freewheeling path is coupled between two output terminals of the converter. The output protection circuit comprises a semiconductor switch connected to an output terminal of the conversion stage, either at the positive rail, the negative rail or, in case of a bipolar converter, also a neutral rail. The voltage clamping device Zf is arranged parallel to the at least one semiconductor switch such that it can provide an alternative current path to the freewheeling path.

In a nominal mode, where no fault is present, the switch S1 is in a closed state such that current can flow from energy source through the converter to its output, e.g., a DC bus or a DC network. Due to the freewheeling diode Df, no current passes through the freewheeling path, independent on the state of the freewheeling switch Sf. Switches S1 and Sf allow for controlling the current in case of a fault, and the voltage clamping device Zf in combination with the switches allows for dissipating energy at a desired point of time. The normal operation and the current limitation, and the current interruption represent different modes or functions. Therefore, the protection circuit is also referred to as multifunction output protection circuit in this disclosure. The output protection circuit further represents an output protection stage of the converter that follows the conversion stage of the converter.

The input terminal and the output terminal at the first voltage have the same or nearly the same voltage, herein also referred to a first voltage level. The input terminal and the output terminal at the second voltage have also the same or nearly the same voltage, herein also referred to a second voltage level, which differs from the first voltage level. Consequently, the interruptible freewheeling path is connected between different voltage levels.

It is possible to implement the freewheeling switch Sf and its parallel voltage clamping device Zf with devices having lower rated voltage compared to S1 and Df. In an example for LV (low voltage) applications, S1 could be implemented using a 1.2 kV SiC MOSFET. The freewheeling switch Sf could be implemented with a very cheap 100 V LV Si MOSFET and voltage clamping device Zf with a cheap 50 V MOV.

The order in which the freewheeling diode Df and the freewheeling switch Sf are connected in series can be freely selected. That is, they can be implemented such that Df is connected with its cathode to the positive output terminal of the output protection stage, and Sf is connected to the negative/neutral power supply rail or vice versa, such that Df is connected with its anode to the negative/neutral power supply rail and Sf is located between Df and the positive output terminal of the output protection stage.

According to an embodiment, in a current limiting mode, the output protection circuit is configured to activate the interruptible freewheeling path by turning on the freewheeling semiconductor switch Sf and to repeatedly turn on and turn off the semiconductor switch S1 between the first input and output terminals.

The output protection circuit remains in the current limiting mode, for example, during an adjustable or pre-defined time period or as long as an overcurrent situation persists.

For switching the switches S1 and Sf, the output protection circuit may comprise a controller or the output protection circuit may receive signals from a controller, which may be part of the converter. The output protection circuit may enter the current limiting mode when a fault is detected on DC grid side. The fault may be detected, for example, by a sensor, which may be part of the output protection circuit or external, and the controller reacts on the sensor signal by providing control signals that switch S1 and Sf as described herein. Since S1 is turned off and on repeatedly, Sf is turned on, and the line to the DC network has inductive characteristics, a freewheeling current is flowing through the freewheeling path, in dependence of the switching of S1. The controller may be or may comprise a microcontroller, an FPGA, and ASIC or any other logical, digital, analog, or mixed circuit, and/or sensors such as current sensors and voltage sensors. The output protection circuit may further comprise a memory to which the controller has access for storing values, such as a pre-defined value for a maximum time period, in which the output protection circuit shall stay in the current limiting mode, and for instructions, e.g., for changing the operation modes and for controlling the switches Sf and S1.

According to an embodiment, in a fast current interruption mode, the output protection circuit is configured to: when an adjustable time period in the current limiting mode has expired, turn off the semiconductor switch S1 between the first input and output terminals S1 and interrupting the freewheeling path by turning off the freewheeling switch Sf.

The current interruption mode does not necessarily follow the current limiting mode. For example, the fault in the power grid or the overcurrent may have been rectified externally before the adjustable time has elapsed. In this case, the protective circuit can switch back to nominal operation.

The fast current interruption mode could follow the current limiting mode after the adjustable time span. The interruption concerns the freewheeling path such the current is forced to use the alternative path via the voltage clamping device, where the energy is dissipated and the freewheeling current rapidly decreases to zero.

Embodiments regarding the implementation are presented in the following.

According to an embodiment, the freewheeling circuit comprises a half bridge in series with the freewheeling switch Sf and the voltage clamping device Zf, the voltage clamping device Zf is parallel to the freewheeling switch Sf, and the freewheeling diode Df is one of the antiparallel diodes of the half bridge.

According to an embodiment, the converter further comprises additional mechanical contacts for galvanic isolation at the first and the second output terminal of the converter.

According to an embodiment, the interruptible freewheeling path is implemented as a reverse-blocking device parallel to a voltage clamping device Zf, such as a RB IGCT.

According to an embodiment, the parallel connection of the voltage clamping device Zf and the freewheeling switch Sf are implemented as an avalanche rated LV MOSFET.

According to an embodiment, the clamping device Zf is one of a varistor, Zener diode, or transient voltage suppressor (TVS) diode.

According to an embodiment, the current limiting mode, the freewheeling switch Sf, the reverse blocking device or the LV MOSFET is in a turned-on state to activate the interruptible freewheeling path.

Optionally, a small inductor at the output side may be inserted for current control purposes or a current sensor may be added at output side for current control purposes. The current sensor may be used to detect a fault or, in particular, to keep the current within the current band during the current limitation period. The conversion stage further may comprise an output filter with an inductance at the output. In this case, optionally a MOV can be added in parallel to the semiconductor switch S1.

According to an embodiment, in a fast current interruption mode, the semiconductor switch S1 is turned off and the interruptible freewheeling path is configured to be de-activated by turning off the freewheeling switch Sf, the reverse blocking device or the LV MOSFET.

According to an embodiment, the conversion stage is a unipolar conversion stage comprising a first and a second conversion stage output terminal, wherein the first conversion stage output terminal is connected to the first input terminal of the output protection circuit and the second conversion stage output terminal is connected to the second input terminal of the output protection circuit.

According to an embodiment, the conversion stage is a bipolar conversion stage comprising a first, a second and a third conversion stage output terminal, and the converter comprises additionally a second output protection circuit; wherein the first conversion stage output terminal is connected to the first input terminal of the first output protection circuit and the second conversion stage output terminal is connected to the second input terminal of the first output protection circuit; wherein the second conversion stage output terminal is further connected to the first input terminal of the second output protection circuit and the third conversion stage output terminal is connected to the second input terminal of the second output protection circuit.

That is, the second output terminal of the first conversion stage is shared with the first output terminal of the second conversion stage and may be a neutral line.

According to a further aspect, a method for protecting power networks is provided. The method comprises following steps. By using an output protection circuit as described herein, in normal conduction mode, turning on the semiconductor switch S1 between the first input and output terminals continuously; and when detecting a fault in the power network, entering a current limiting mode by activating the interruptible freewheeling path by turning on the freewheeling semiconductor switch Sf and repeatedly turning on and turning off the semiconductor switch S1.

The method may be supported by a controller as described above, voltage sensors current sensors, analog and/or digital circuits, etc.

The output protection circuit remains in the current limiting mode, for example, during an adjustable time period or as long as an overcurrent situation persists.

According to an embodiment, the method further comprises the step: when an adjustable time period in the current limiting mode has expired, activating the fast current interruption mode by turning off the semiconductor switch S1 between the first input and output terminals S1 and interrupting the freewheeling path by turning off the freewheeling switch Sf.

The current interruption mode does not necessarily follow the current limiting mode. For example, the fault in the power grid or the overcurrent may have been rectified externally before the adjustable time has elapsed. In this case, the protective circuit can switch back to nominal operation.

According to a further aspect, a use of the output protection circuit as described herein for limiting current in case of a fault in a power network, for fast interrupting current in case of a fault in a power network, for pre-charging a dead DC bus, or for energizing input capacitors of converters is provided.

Summarized, an extension for supply converters is proposed. The multifunction output protection circuit can be added to any converter topology. It introduces an interruptible freewheeling path to the converter output, which allows to limit fault currents for long time and to interrupt the fault current including tail current immediately if needed. This output protection stage enables new protection coordination concepts with mechanical contactors or relays.

This multifunction output protection stage, i.e., the output protection circuit, can be added to any converter topology, including non-isolated DC-DC converters (buck, boost, buck-boost, ...), isolated DC-DC converters (DAB, flyback, LLC, etc.) or AC-DC converters (active rectifiers, diode rectifiers, etc.) which are commonly used to supply a DC grid with energy from a source (PV, battery, fuel cell, AC grid, etc.).

These and other features, aspects and advantages of the present invention will become better understood with reference to the accompanying figures and the following description.

### Short Description of the Figures

Fig. 1 shows a block diagram of the converter including the output protection circuit, in an DC grid application.
Fig. 2 shows a circuit diagram of the converter including the output protection circuit.
Figs. 3a to 3c show the current flow in various modes of the multi-functional protection output stage.
Fig. 4 shows a diagram of the L1 inductor current during the various modes.
Fig. 5a shows a diagram of a converter protected with a common SSCB circuit that is connected to its output terminal.
Fig. 5b shows a diagram of a converter protected with a common protection stage consisting of a series switch and a common freewheeling path.
Fig. 5c shows a diagram of the L1 inductor current in a converter according to Fig. 5b.
Fig. 6 shows a diagram of an application with several downstream branches where a faulty branch is isolated.
Fig. 7 shows a circuit diagram of an output protection circuit variant with the semiconductor switch in the negative rail.
Fig. 8 shows a circuit diagram of a output protection circuit variant with a half bridge.
Fig. 9 shows a circuit diagram of two output protection circuits with terminals to a conversion stage for a bipolar converter.
Fig. 10 shows a flow diagram of the method for protecting a DC grid using the output protection circuit.

### Detailed Description of Embodiments

Corresponding parts are provided with the same reference symbols in all figures.

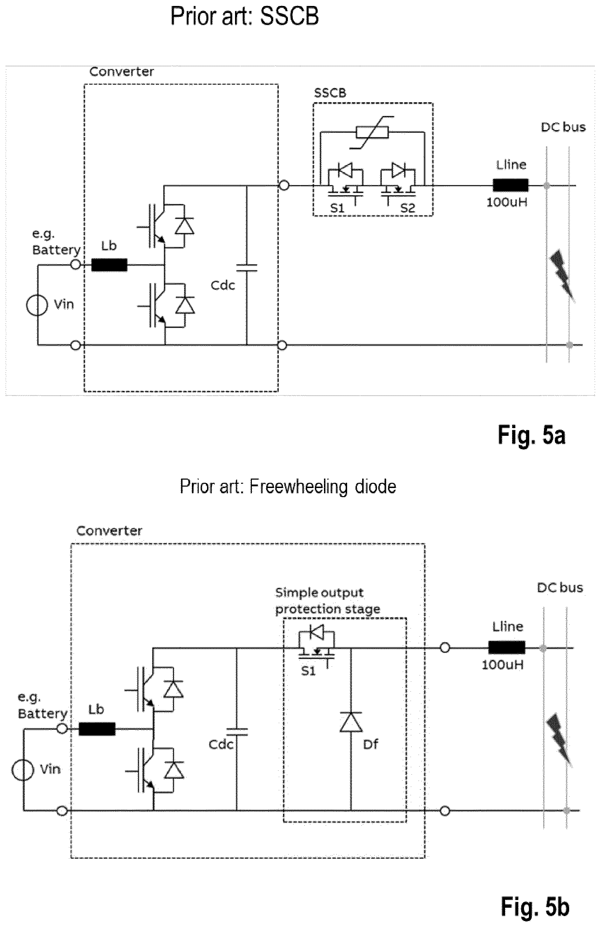

If a converter without fault current limiting capability, such as boost converter, is used to supply the DC network, typically a fast SSCB needs to be connected close to its output terminals to protect the converter and the system from faults in the DC network. An example of such an SSCB is shown in Fig. 5a. Such an SSCB may consist for example of a bi-directional semiconductor series switch and a varistor parallel to the switch. The fast SSCB is important to protect the semiconductors of the boost converter from overcurrent in case of a fault in the DC network. During the fault, the bus voltage can be close to zero volts and the anti-parallel diode of the upper switch in the boost converter becomes forward biased. Consequently, a high overcurrent will flow, which potentially would destroy the diode and further components in the boost converter if the fault current is not interrupted by the SSCB immediately. Although the SSCB is capable to interrupt fault currents very quickly, it is not suitable to limit the output current for a significant time duration because of excessive losses in the varistor when operated in chopping mode. The losses lead to overheating and malfunction of the SSCB after a few hundreds of microseconds. Realistically, the SSCB cannot be used to limit the current for a sufficient time duration to allow slower downstream breakers of mechanical or hybrid type to open, as these devices have reaction times between 1 - 20 ms.

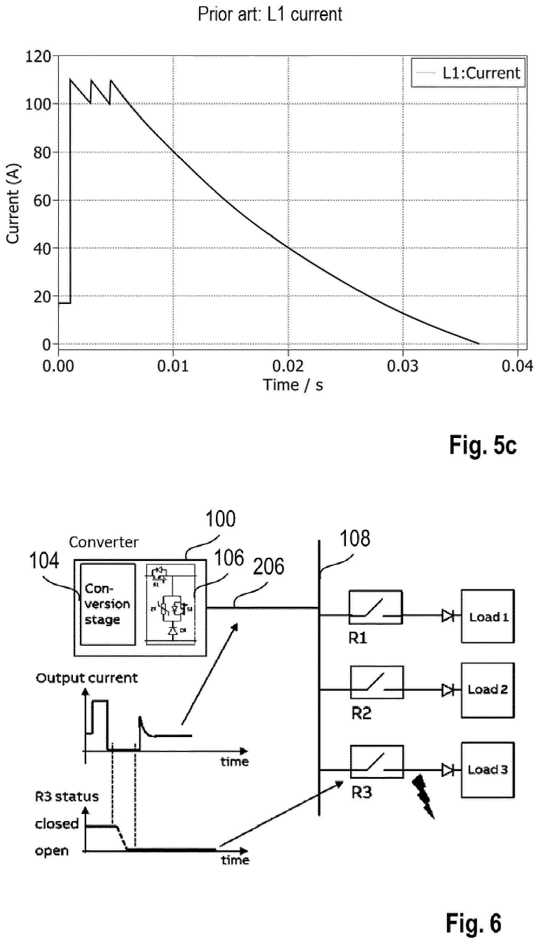

Another common solution to this problem is the addition of a simple output protection stage with a series switch and a freewheeling diode in parallel to the output terminals, as shown in Fig. 5b. This solution allows to limit fault currents for an extended time duration of several hundreds of milliseconds because of the good cooling possibilities within the converter (heatsink with forced air cooling) and low losses during current-limiting operation with freewheeling diode. However, when the current should be interrupted, typically a tail current occurs as the current circulates over the freewheeling diode with low voltage drop, as shown in Fig. 5c. This tail current can last for several 100 ms in highly inductive DC grids. The fault energy is dissipated in the fault and in the network itself what might not be acceptable in every application. Furthermore, downstream breakers need to interrupt the remaining fault current by themselves, as they cannot rely on converters to reduce the output current to zero fast enough.

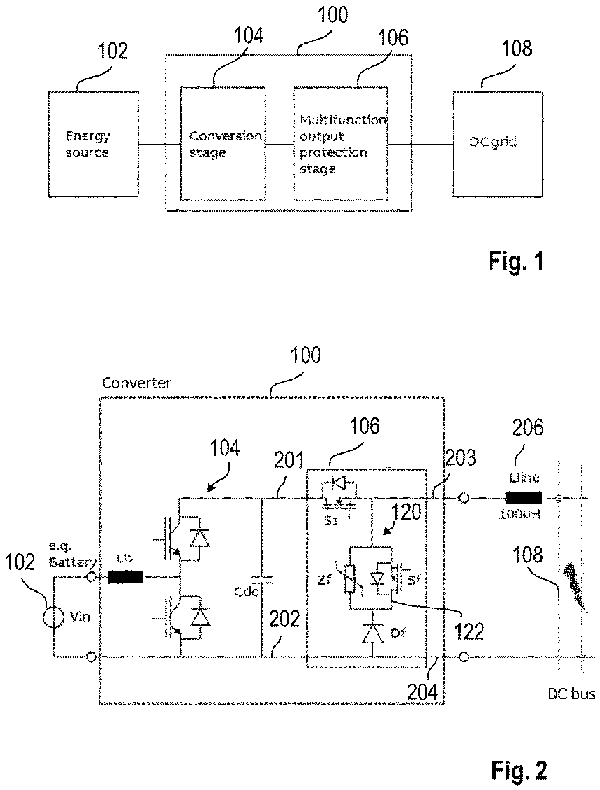

Fig. 1 shows a block diagram illustrating the inclusion of the multifunction output protection circuit 106 into the converter 100 in a DC grid application. An energy source 102 provides the energy for the converter 100, which comprises the conversion stage 104, i.e., converter 104 and the multifunction output protection stage 106, i.e., the multifunction output protection circuit 106. The converted energy is provided to the DC grid 108. The energy source 102 may be a battery, a photovoltaic (PV) energy source, a fuel cell, a wind energy source, an AC grid, or the like. The converter 104 may be a non-isolated DC/DC converter, an isolated DC/DC converter, a one phase or three phase AC/DC converter or the like. The DC grid 108 may be multiple loads or sources supplied by the converter 100. The DC grid protection scheme may be based on circuit breakers such as a Miniature Circuit Breakers (MCB).

Fig. 2 shows a circuit diagram of a converter 100, where the converter 104 is implemented by a half bridge and a capacitor Cdc. The connection to the energy source 102 is subject to an inductance Lb. The energy source 102 in the example of Fig. 2 is a battery or one of the sources mentioned above. The output terminal 201 of the conversion stage 104 on a first voltage level, e.g. the positive terminal of the conversion stage 104 is the first input terminal 201 of the multi-functional output protection circuit 106. The output terminal 202 of the conversion stage 104 on a second voltage level, e.g. the negative terminal, is the second input terminal 202 of the multi-functional output protection circuit 106. The output terminal 203 of the converter 100 on the first voltage level is the first output terminal 203 of the multi-functional output protection circuit 106. The second output terminal 204 of the multi-functional output protection circuit 106 on the second voltage level is also an output terminal 204 of the converter 100. The line 206 to the DC bus 108 is subject to a line inductivity which is represented by the inductance Lline. The value of this inductance is for example 100 µH. A short circuit can occur on the intermediate DC bus, as indicated by an arrow, against which the protective circuit presented here protects the conversion stage 104.

The multi-functional output protection protection circuit 106 comprises an interruptible freewheeling path 122, which is defined by the freewheeling diode Df in series with the freewheeling switch Sf. The freewheeling switch Sf may optionally comprise a body diode. Further, in series with the freewheeling diode Df and in parallel to the freewheeling switch Sf, there is a voltage clamping device Zf, which is in Fig. 2 a varistor, but which may also be realized by a Zener diode, or transient voltage suppressor (TVS) diode.

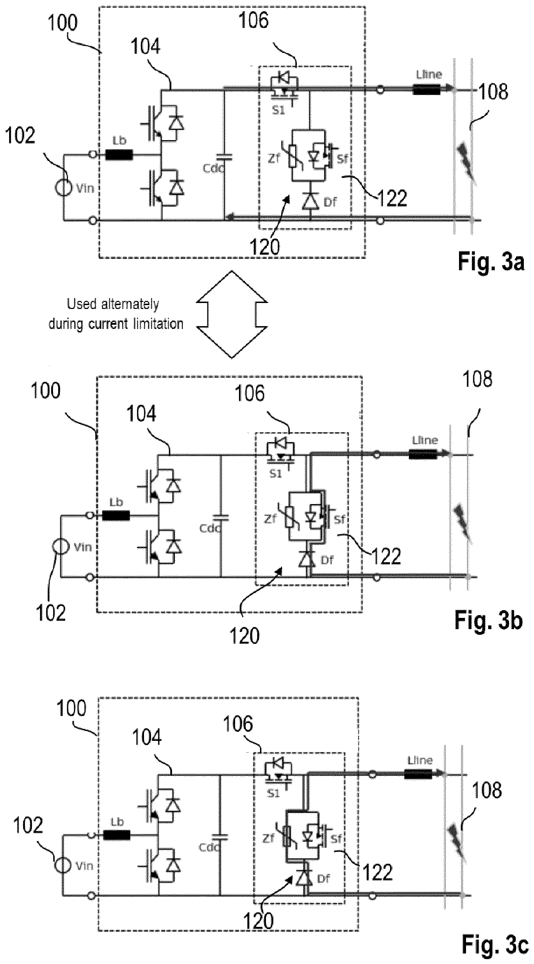

The operation of the output protection circuit 106 shown in Fig. 2 for protecting power networks is explained at hand of the method 1000 depicted in Fig. 10 and the current flow as illustrated in Figs. 3a to 3c. The output protection circuit 106 has three operation modes: a normal conduction mode or "nominal operation mode 1002, a current limiting mode 1004, and a fast current interruption mode 1006 with safe energy dissipation.

In nominal operation mode corresponding to step 1002 in Fig. 10, S1 is turned on continuously such that current flows normally from the energy source 102 to the DC bus 108 (or vice versa from the DC bus to the energy source) as illustrated in Fig. 3a. The freewheeling path 122 is blocked due to negatively biased diode Df. The freewheeling semiconductor switch Sf can either be turned off or on, but beneficially stays turned on. Any normal regulation strategy is performed by the traditional conversion stage 104 and is not affected by the multifunction output protection stage 106.

In case of a detected fault as indicated by the arrow at the DC bus 108, the multifunction output protection stage 106 can switch from continuous conduction mode 1002 to current limiting mode 1004 immediately. The current can be limited to a given value in a low loss process by entering this current limiting mode 1004. When entering the current limiting mode 1004, the switch S1 is turned off and on repeatedly to control the output current to a specified value. The freewheeling activation switch Sf is turned on continuously to ensure that the freewheeling path 122 is activated through which the current is forced. In general, there are good cooling possibility available in the converter 100, such as a heatsink with forced air cooling, which allow for an extended time period of several hundreds of milliseconds in the current limiting mode.

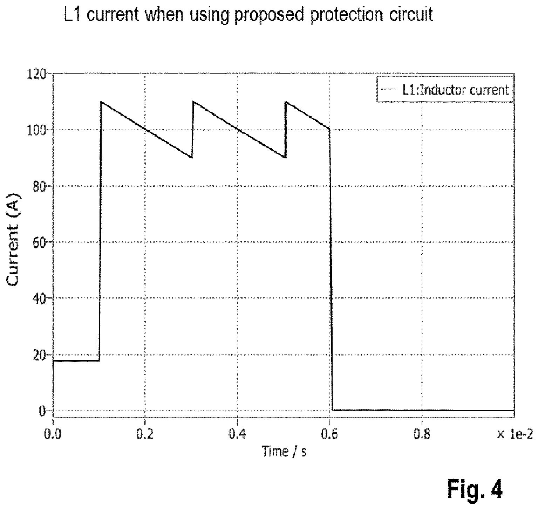

A number of control schemes are possible. For example, the current limitation can be achieved using a tolerance band control scheme. An example is shown in Figure 4.

The current limit is 110 A with a tolerance band of 20 A. The total downstream line inductance, i.e. the inductance of line 206, is 100 µH. An ideal short circuit fault is applied at the end of the line after 1 ms in this example. When the current reaches the upper current threshold, the semiconductor switch S1 is turned off. The output current commutates to the freewheeling path 122 (Df, Sf) as illustrated in Fig. 3b and circulates. No varistor is needed across S1 as the DC link capacitance Cdc clamps the overvoltage across S1 to an allowed value when the switch S1 is turned off. While the output current circulates over the freewheeling path 122, a reduced voltage, which is just a few volts is applied to the downstream line inductance. Neglecting line and fault resistance, this voltage is composed of the forward voltage that drops at the freewheeling diode Df and the voltage that drops at the switch Sf. This leads to a slow reduction of the output current according to: VL = -Vfd = L*di/dt ≈ -2 V. When the current reaches the lower threshold of the tolerance band, the switch S1 is turned on again until the current reaches the upper threshold, which corresponds again to the current flow as illustrated in Fig. 3a. Depending on the line inductance Lline, the switching frequency is in the range of a few kHz and the associated losses can easily be dissipated. The sequence is repeated as long as current limitation is needed. If it is detected that the fault or the overcurrent disappeared, nominal operation mode 1002 is re-entered. However, if fault or overcurrent is still present and if an adjustable time period staying in the current limiting mode 1004 has expired or another condition for entering fast current interruption mode 1006 is fulfilled, the fast current interruption mode 1006 is activated. When the entering fast current interruption mode 1006, the switch S1 is turned off and the freewheeling path 122 is closed by turning off the freewheeling switch Sf. The fault current is then forced to the varistor Zf and the fault energy is dissipated in this safe location quickly and the current decays to zero within a few microseconds. Therefore, by interrupting, i.e., turning off, the switch Sf, the fault can be interrupted quickly. An example where Sf is turned off after t = 6 ms is shown in Fig. 4, which illustrates the improvement with respect to the prior art case as shown in Fig. 5c. It is to be noted that the scale of the x-axis in Fig, 5c is in seconds and the scale in Fig. 4 is 10⁻² s.

The presented concept can be used to implement precharge current control in order to energize a dead bus and input capacitors of converters. This functionality is also known as blackstart capability. As the protection stage 106 features output current control functionality even in case the DC bus voltage is below the source voltage Vin, the DC bus and potentially connected load converters with input capacitors can be charged with a predefined, limited current and the bus voltage is slowly ramped up to nominal voltage.

The multifunction output protection stage 106 can also be used to ramp down the fault current within a few microseconds to allow downstream switches of mechanical type (contactors, relays) to open under zero current condition. It enables new protection coordination schemes. An example is shown in Fig. 6. Instead of using mechanical circuit breakers to protect downstream branches, simple contactors or relays are installed. If a fault occurs in branch 3 with Relay R3 and load 3, the supply converter 100 immediately limits the fault current to an admissible level for a given time duration. The time duration should be enough for the downstream switch to notice the fault. Afterwards, the supply converter ramps down the fault current to zero and gives the downstream switch R3 the chance to open under zero current condition. Afterwards, the supply converter ramps current up again and reestablishes the bus voltage within a few hundreds of microseconds. The fault is isolated and cleared. If several supply converters are being used, they can also coordinate on a common timing scheme defining current limitation period and zero current period. This approach would not be possible without the freewheeling interruption switch Sf because of the unavoidable tail current using a simple freewheeling diode.

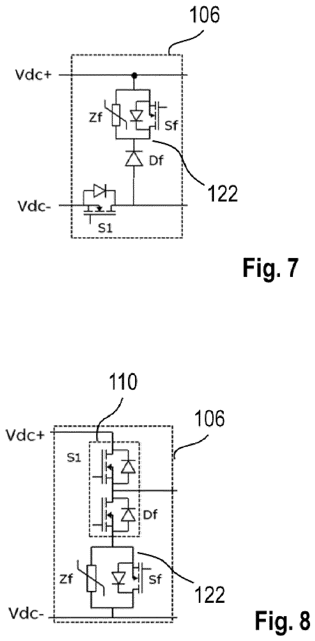

Various implementation options of the freewheeling circuit 120 are presented in Figs. 7 to 9.

It is possible to arrange the switches differently and achieve the same functionality of the multipurpose output protection stage. A first variant, in which the series switch S1 is connected to the DC- instead of to the DC+ terminal, is shown in Figure 7.

A further variant, in which the freewheeling diode is replaced by the antiparallel diode of the low-side switch of a conventional half-bridge module 110, is shown in Fig. 8. The half bridge 110 is arranged in series with the freewheeling switch Sf and the voltage clamping device Zf, the voltage clamping device Zf is parallel to the freewheeling switch Sf, and the freewheeling diode Df is one of the antiparallel diodes of the half bridge (110).

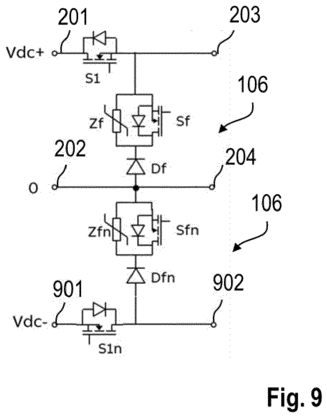

Furthermore, it is possible to extend the multifunction output protection stage 106 such that it can be applied to converter topologies feeding bipolar DC grids having a positive, a negative and a neutral supply line as shown in Fig. 9. The conversion stage 104 then is a bipolar conversion stage comprising a first 201, a second 202 and a third 901 conversion stage output terminal, and the converter 100 comprises additionally a second output protection circuit 106. The first conversion stage output terminal 201 is connected to the first input terminal 201 of the first output protection circuit and the second conversion stage output terminal 202 is connected to the second input terminal 202 of the first output protection circuit 106, in Fig. 9 the upper one. The second conversion stage output terminal 202 is further connected to the first input terminal 202 of the second output protection circuit 106, in Fig. 9 the lower one, and the third conversion stage 901 output terminal is connected to the second input terminal 901 of the second output protection circuit 106. Since the output terminals of the conversion stage correspond to the input terminals of the output protection circuits 106, only one reference sign is used for such an input/output terminal pair. That is, the second output terminal of the first conversion stage is shared with the first output terminal of the second conversion stage and may be a neutral line. Accordingly, the first output protection stage 106 has two output terminals 203 and 204, and the second output protection stage 106 has two output terminals 204 and 902.

Optionally, the converter may have additional mechanical contacts for galvanic isolation at the output terminals.

In alternative embodiments, Df and Zf/Sf swap position: Df is connected with its cathode to the source terminal of S1, and Zf/Sf is connected to the negative/neutral power supply rail.

As a variant, the parallel connection of Zf and Sf could be replaced with a semiconductor that has high repetitive avalanche capability, such as an avalanche rated LV MOSFET. The voltage clamping device Zf could be a varistor or any other voltage clamping device such as a Zener diode or a transient voltage suppressor (TVS) diode. Optionally, in case the main conversion stage has an output filter with an inductance at the output, a MOV can be added in parallel to S1. As further option, a small inductor at the output side may be inserted for current control purposes.

Optionally, a current sensor may be implemented at the output side for current control purposes.

In alternative embodiments, the varistor Zf could be connected across Sf and Df.

In further alternative embodiments, Sf and Df could be replaced by a reverse-blocking device, such as an RB IGCT.

Regarding further implementation aspects, it is possible to implement the freewheeling activation switch Sf and its parallel varistor Zf with devices having lower rated voltage compared to S1 and Df. Further, in an example for LV applications, S1 could be implemented using a 1.2 kV SiC MOSFET. Instead, Sf could be implemented with a very cheap 100 V LV Si MOSFET and Zf with a cheap 50 V MOV. Ideally, the clamping voltage Vzf of varistor Zf is chosen to be smaller than the difference of rated voltage VrS1 of switch S1, and the nominal bus voltage Vn: Vzf < VrS1 - Vn. This avoids creating too high overvoltage across switch S1 while the freewheeling branch is being deactivated, and avoids potential damage of S1.

### Reference Numerals

- 100: DC Converter
- 102: energy source
- 104: conversion stage
- 106: (multifunction) output protection circuit
- 108: DC grid
- 110: half bridge as part of the output protection circuit
- 120: freewheeling circuit
- 122: interruptible freewheeling path
- 201: output terminal of the conversion stage; first input terminal of the multi-functional output protection circuit on a first voltage level
- 202: output terminal of the conversion stage; second input terminal of the multi-functional output protection circuit on a second voltage level
- 203: output terminal of the converter, first output terminal of the multi-functional output protection circuit on the first voltage level
- 204: output terminal of the converter, second output terminal of the multi-functional output protection circuit on the second voltage level
- 206: line between converter and DC bus
- 901: third output terminal of the conversion stage; third input terminal of the multi-functional output protection circuit on a third voltage level
- 902: third output terminal of the converter; third output terminal of the multi-functional output protection circuit on a third voltage level
- 1000: Method for protecting power networks
- 1002: operation in nominal operation mode
- 1004: operation in current limiting mode
- 1006: operation in fast current interruption mode

## Claims

1. Converter (100) comprising a conversion stage (104) and an output protection circuit (106); wherein the output protection circuit (106) comprises:
a first input terminal (201) and a second input terminal (202);
a first output terminal (203) and a second output terminal (204);
wherein the first input terminal (201) and the first output terminal (203) are on a first voltage level and the second input terminal (202) and the second output terminal (204) are on a second voltage level;
a switch S1 connected between the first input and output terminals or between the second input and output terminals; and
a freewheeling circuit (120) between the first output terminal (203) and the second output terminal (204), comprising
an interruptible freewheeling path (122) including a freewheeling switch Sf and a freewheeling diode Df; and
a voltage clamping device Zf parallel to at least the freewheeling switch Sf.

2. Converter (100) according to claim 1, wherein, in a current limiting mode, the output protection circuit (106) is configured to
activate the interruptible freewheeling path (122) (122 )by turning on the freewheeling semiconductor switch Sf and to
repeatedly turn on and turn off the semiconductor switch S1 between the first input and output terminals.

3. Converter (100) according to claim 2, wherein, in a fast current interruption mode, the output protection circuit (106) is configured to:
when an adjustable time period in the current limiting mode has expired, turn off the semiconductor switch S1 between the first input and output terminals S1 and interrupting the interruptible freewheeling path (122) by turning off the freewheeling switch Sf.

4. Converter (100) according to any one of the previous claims, wherein the freewheeling circuit (120) comprises a half bridge (110) in series with the freewheeling switch Sf and the voltage clamping device Zf, the voltage clamping device Zf is parallel to the freewheeling switch Sf, and the freewheeling diode Df is one of the antiparallel diodes of the half bridge (110).

5. Converter (100) according to any one of the previous claims, further comprising additional mechanical contacts for galvanic isolation at the first and the second output terminal of the converter.

6. Converter (100) according to any one of the previous claims, wherein the interruptible freewheeling path (122) is implemented as a reverse-blocking device parallel to a voltage clamping device Zf.

7. Converter (100) according to any one of the previous claims, wherein the parallel connection of the voltage clamping device Zf and the freewheeling switch Sf are implemented as an avalanche rated LV MOSFET.

8. Converter (100) according to any one of the previous claims, wherein the voltage clamping device Zf is one of a varistor, Zener diode, or transient voltage suppressor (TVS) diode.

9. Converter (100) according to any one of the previous claims, wherein, in the current limiting mode, the freewheeling switch Sf, the reverse blocking device according to claim 6 or the LV MOSFET according to claim 7 is in a turned-on state to activate the interruptible freewheeling path.

10. Converter (100) according to any one of the previous claims, wherein, in a fast current interruption mode, the semiconductor switch S1 is turned off and the interruptible freewheeling path (122) is configured to be de-activated by turning off the freewheeling switch Sf, the reverse blocking device or the LV MOSFET.

11. Converter (100) according to any one of the previous claims, wherein the conversion stage is a unipolar conversion stage comprising a first and a second conversion stage output terminal, wherein the first conversion stage output terminal is connected to the first input terminal of the output protection circuit and the second conversion stage output terminal is connected to the second input terminal of the output protection circuit.

12. Converter (100) according to any one of claims 1 to 10, wherein the conversion stage (104) is a bipolar conversion stage (104) comprising a first (201), a second (202) and a third (901) conversion stage output terminal, and the converter (100) comprises additionally a second output protection circuit (106);
wherein the first conversion stage output terminal (201) is connected to the first input terminal (201) of the first output protection circuit and the second conversion stage output terminal (202) is connected to the second input terminal (202) of the first output protection circuit;
wherein the second conversion stage output terminal (202) is further connected to the first input terminal (202) of the second output protection circuit and the third conversion stage (901) output terminal is connected to the second input terminal (901) of the second output protection circuit.

13. Method (1000) for protecting power networks, comprising the steps:
by using an output protection circuit (106) according to any of the previous claims:
in normal conduction mode, turning on the semiconductor switch S1 continuously; and
when detecting a fault in the power network, entering a current limiting mode by activating the interruptible freewheeling path (122) by turning on the freewheeling semiconductor switch Sf and repeatedly turning on and turning off the semiconductor switch S1.

14. Method (1000) according to claim 12 or 13, further comprising the step:
when an adjustable time period in the current limiting mode has expired, activating the fast current interruption mode by turning off the semiconductor switch S1 between the first input and output terminals S1 and interrupting the freewheeling path (122) by turning off the freewheeling switch Sf.

15. Use of the output protection circuit (106) according to claim 1 for limiting current in case of a fault in a power network, for fast interrupting current in case of a fault in a power network, for pre-charging a dead DC bus, or for energizing input capacitors of converters.
